# EUROPEAN PATENT SPECIFICATION

(11) **EP 4 298 550 B1**
(45) Date of publication and mention of the grant of the patent: **24.06.2026**
(21) Application number: 21723028.3
(22) Date of filing: 16.03.2021
(51) Int. Cl.: G06V 10/60, G06V 10/44, G06V 40/16, G06N 3/045, G06N 3/0464, G06N 3/047, G06N 3/0475, G06N 3/08, G06N 3/094, G06N 3/09, G06T 5/60, G06T 5/77

(54) **REFLECTION REMOVAL FROM AN IMAGE**
REFLEXIONSBESEITIGUNG AUS EINEM BILD
ÉLIMINATION DE REFLETS D'UNE IMAGE

(43) Date of publication of application: 03.01.2024
(73) Proprietor: Huawei Technologies Co., Ltd., Shenzhen, Guangdong 518129 (CN)
(72) Inventor: OSTYAKOV, Pavel Aleksandrovich, Shenzhen Guangdong, 518129 (CN); LEFKIMMIATIS, Stamatis, Shenzhen Guangdong, 518129 (CN); KHIZBULLIN, Renat Ahmirovich, Shenzhen Guangdong, 518129 (CN)
(74) Representative: Roth, Sebastian
(86) International application number: PCT/RU2021/000107
(87) International publication number: WO 2022/197198

(56) References cited:
- CN-A- 111 325 698
- HEO MIRAN ET AL: "Single-image reflection removal using conditional GANs", 2019 INTERNATIONAL CONFERENCE ON ELECTRONICS, INFORMATION, AND COMMUNICATION (ICEIC), INSTITUTE OF ELECTRONICS AND INFORMATION ENGINEERS (IEIE), 22 January 2019 (2019-01-22), IEEE, Piscataway, NJ, USA, pages 1 - 4, XP033544793, DOI: 10.23919/ELINFOCOM.2019.8706433

## Description

### TECHNICAL FIELD

The present disclosure relates to the technical field of image processing in particular to a method and device for removing undesired reflections from an image.

### BACKGROUND

In some situations, photographs are taken through a glass surface or the like. In such situations, the visual quality of the obtained images can decrease dramatically due to the appearance of undesired reflections. There are, in fact, many situations, in which taking a clear image without any reflections is challenging. For example, photographs from an airplane or a train are often corrupted by undesired reflections. Another common example concerns photographs taken of people wearing eyeglasses, wherein reflections in the eyeglasses in the obtained image are caused by lamps or phone screens when taking, for example, a selfie photo.

Several conventional methods are proposed to remove reflections from an image. For example, by decomposing the image into two layers. However, this is a highly ill-posed problem, since the number of unknown parameters is twice as many as giving values. Without additional assumptions there is thus an almost infinite number of variants to extract the background and reflection layers. Therefore, in early works (see, e.g., "Single image reflection suppression'', IEEE Conference on Computer Vision and Pattern Recognition (CVPR), pages 1752-1760, July 2017, by N. Arvanitopoulos et al.), this task was considered as an optimization problem with constraints arising from the different image priors proposed to take a single solution. Besides the fact that these methods produce poor results and can work only on a limited amount of cases, most of the optimization techniques are too slow for using them in real-time systems, in particular, in smartphones.

Due to the success of deep learning methods for many computer vision problems, such methods are also used for reflection removal. For example, Fan et al. in "A generic deep architecture for single image reflection removal and image smoothing", 2017, propose to train an end-to-end convolutional neural network (CNN) to estimate a background scene using a two-staged pipeline. Firstly, an edge map is predicted giving a mixture image. Afterwards, a background layer is produced giving edges and the input picture. Because of the lack of real paired data, synthetic data is used for training the CNN. At later works, modern deep learning techniques were used to improve the visual quality: perceptual loss, and adversarial loss.

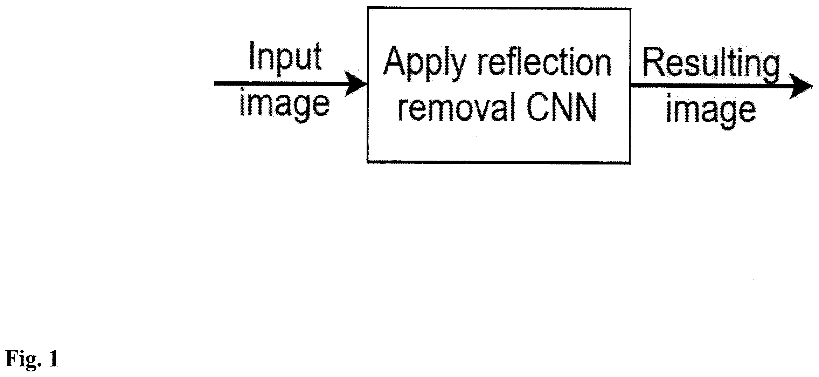

Current methods (see, e.g., the above mentioned work of Fan et al. or "Single image reflection removal exploiting misaligned training data and network enhancements." In Proceedings of the IEEE Conference on Computer Vision and Pattern Recognition, pages 8178-8187, 2019, by Wei et al.) apply the CNN to the full image, and expect the CNN to detect areas with reflections and remove them simultaneously, as is illustrated in Fig. 1. This has several disadvantages. In fact, since the CNN is applied to the whole image, the processing time is huge, even if the image area that actually includes reflections is small. Further, since the network is required to be able to detect and remove reflections, a large amount of the CNN capacity is spent on the detection task, which leads to a worse reflection removal quality. Moreover, these methods cannot detect reflections ideally, for instance, they produce undesirable changes in areas without reflections.

Thus, there is a need for an improved method and device for removing reflections from images.

Document CN 111 325 698 A provides an image processing method comprising the steps of carrying out region segmentation of a target image, and obtaining a target region in the target image; and inputting the target image and the target area of the target image into an image processing model, so that the image processing model performs image processing on the target area of the target image to obtain a processed image corresponding to the target image.

### SUMMARY

In view of the above-mentioned problems and disadvantages, the present disclosure aims to improve the removal of undesired reflections from an image. The present disclosure has thereby the object to provide for an improved device and method for removing the undesired reflections.

The object of the present invention is achieved by the embodiments provided in the enclosed independent claims. Advantageous implementations of the embodiments are further defined in the dependent claims.

According to a first aspect, the disclosure relates to a method for removing reflections from an image, the method comprising: detecting one or more reflection areas in the image, wherein each reflection area includes a reflection, extracting the one or more reflection areas from the image, and removing the reflection from each of the extracted reflection areas.

The method of the first aspect has the advantage that undesirable reflections can efficiently be removed from the image, e.g., a photograph. The method of the first aspect works in many different cases of reflections. Further, the method is fast enough for being used in a real-time system, in particular, in a smartphone. The method of the first aspect also avoids undesirable changes in areas without reflections. These advantages are particularly achieved because of the two stage approach, i.e., the detection of reflections in the first stage, and the removal of reflections from the reflection areas only in the second stage.

In an implementation form of the first aspect, after removing the reflection from each of the extracted reflection areas, reinserting the extracted reflection areas without the reflection into the image to replace, respectively, the reflection areas with the reflection.

This provides the advantage that a processed image without reflections can be obtained.

In an implementation form of the first aspect, a first trained model is used to detect the one or more reflection areas; and a second trained model is used to remove the reflection from each of the extracted reflection areas.

This provides the advantage that the detection and the removal of the reflections in the image can be efficiently and accurately performed by means of trained models. In particular, each trained model can be specifically trained. That is, the first trained model can be specifically trained to detect reflections in an image, and the second trained model can be specifically trained to remove reflections from reflection areas (not the entire image). Thus, both the training phase and the inference phase can be performed faster, and the quality of the results is improved. In an implementation form of the first aspect, the first trained model comprises a first CNN.

This provides the advantage that well-known trained models may be used. Moreover, this provides the advantage that an improvement of the execution time for the reflection removal may achieved (compared to the conventional method shown in Fig. 1, for example), due to the fact that the CNN is applied only to the areas comprising reflections and not to the entire image. Moreover, the removal of undesirable artefacts by processing only crops with the CNN may prevent areas without reflections from being changed. Further, it improves the resulting de-reflection quality by targeting the CNN on specific areas, and not requiring it to detect reflection areas as such.

In an implementation form of the first aspect, the first CNN comprises a semantic segmentation CNN configured to perform a semantic segmentation of the image.

In an implementation form of the first aspect, the one or more reflection areas are detected using a semantic mask.

The above implementation forms provide a simple but efficient way to detect the reflection areas in the image.

In an implementation form of the first aspect, the second trained model comprises a generative adversarial network (GAN).

This provides the advantage that a well-known trained model may be used to remove the reflections on the image. The advantages of the GAN may be employed.

In an implementation form of the first aspect, the GAN comprises a conditional GAN.

This provides the advantage that a well-known trained model may be used to remove the reflections on the image.

In an implementation form of the first aspect, the second trained model comprises a second CNN.

In an implementation form of the first aspect, the image is a photograph of a person wearing eyeglasses, and wherein the step of detecting the one or more reflection areas comprises: detecting a face of the person in the image, detecting the eyeglasses in the image based on the detected face, and detecting the one or more reflection areas located within the eyeglasses detected in the image.

In an implementation form of the first aspect, the eyeglasses are detected in the image using the segmentation CNN.

In an implementation form of the first aspect, segmenting the eyeglasses detected in the image by the segmentation CNN: extracting the obtained eyeglass segments from the image, detecting the one or more reflection areas located within the eyeglasses by removing eyeglasses segments without reflection from the extracted eyeglasses segments, and removing the reflection from each of the extracted eyeglasses segments with reflection.

The above implementation forms provide a particularly efficient way to detect and remove reflections in the case of images including persons wearing eyeglasses.

According to a second aspect, the disclosure relates to a device for removing reflections from an image, the device being configured to: detect one or more reflection areas in the image, wherein each reflection area includes a reflection, extract the one or more reflection areas from the image, and remove the reflection from each of the extracted reflection areas.

Generally, the device of the second aspect is thus configured to perform the method of the first aspect. The device of the second aspect may further have implementation forms according to the implementation forms of the first aspect. That is, the device of the second aspect may be configured to perform the method according to any implementation form of the first aspect. Accordingly, the device of the second aspect achieves all advantages and effects of the method of the first aspect.

According to a third aspect, the disclosure relates to a computer program comprising a program code for performing the method according to the first aspect or any one of the implementation forms thereof.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of this disclosure will be explained in the following description of specific embodiments in relation to the enclosed drawings, in which:
- FIG. 1: shows a schematic representation of a conventional pipeline for reflection removal from an image;
- FIG. 2: shows a schematic representation of a method for reflection removal from an image according to an embodiment;
- FIG. 3: shows a schematic representation of a pipeline for reflection removal from an image according to an embodiment;
- FIG. 4: shows a schematic representation of a pipeline for reflection removal from an image according to an embodiment;
- FIG. 5: shows a schematic representation of a pipeline for reflection removal from an image according to an embodiment; and
- FIG. 6: shows a device for reflection removal from an image according to an embodiment.

### DETAILED DESCRIPTION OF EMBODIMENTS

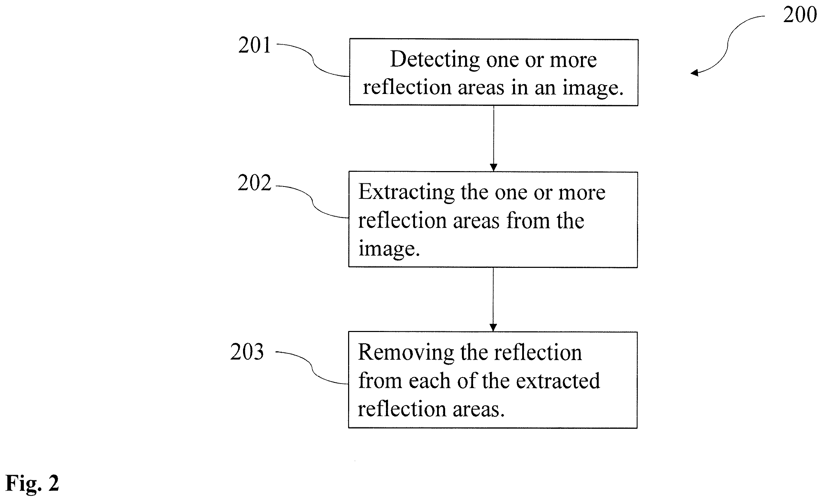

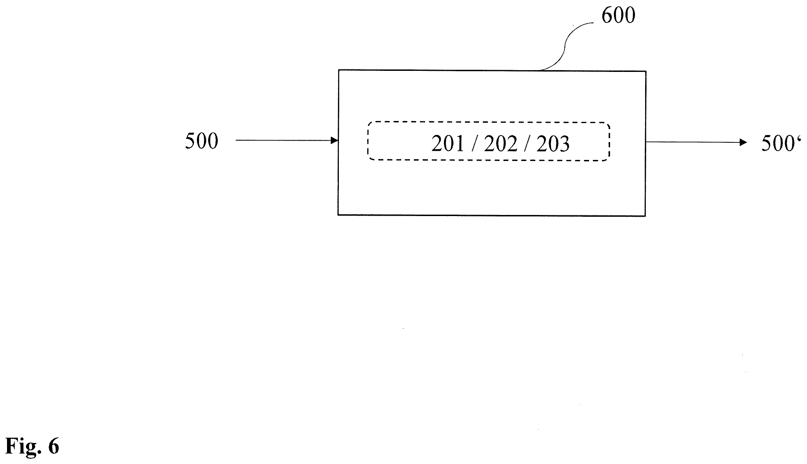

FIG. 2 shows a schematic representation of a method 200 for reflection removal from an image, according to an embodiment. The method 200 may be performed by a device 600 (see e.g. FIG. 6), for instance by a processor of an electronic consumer device like a smartphone, tablet or digital camera. The method 200 may be performed by a device 600 that is also capable of taking the image 500.

The method 200 comprises a step 201 of detecting one or more reflection areas in the image 500. Each reflection area includes at least one reflection. That is, the method 200 detects specifically where the reflections are located in the image 500, and determines accordingly image areas comprising or consisting of these reflections.

Further, the method 200 comprises a step 202 of extracting the one or more reflection areas from the image 500. The one or more detected reflection areas are cropped from the image 500, or may be copied from the image 500. Further processing does then not have to be applied to the whole image 500, but is applied only to the extracted reflection areas. Thus, the method 200, particularly the reflection removal, may work faster.

The method 200 further comprises a step 203 of removing the reflection from each of the extracted reflection areas. To this end, a conventional reflection removal algorithm may be used. Also, a trained model, trained for this purpose, may be used. This trained model may be specifically trained to operate on reflection areas, i.e., specific image segments, and not on entire images.

Moreover, the method 200 also comprises a reinsertion step. In particular, after the removal 202 of the reflections from each of the extracted reflection areas, the method 200 comprises a step of reinserting the extracted reflection areas without the reflection into the image 500, in order to replace, respectively, the reflection areas with the reflection. Thus, a processed image without reflections, or at least with a significantly reduced amount of reflections, may be obtained.

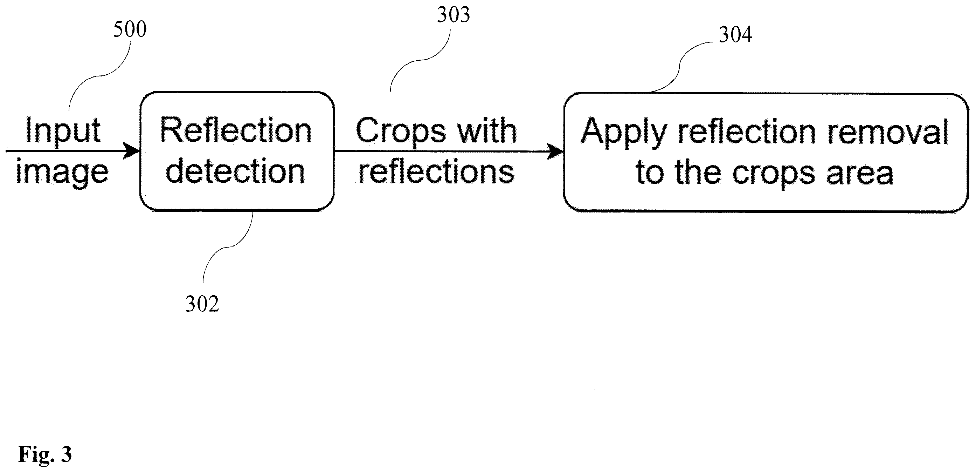

FIG. 3 shows a schematic representation of a pipeline for reflection removal from an image 500, which may be used for performing the method 200 according to an embodiment. The pipeline may be part of a device 600 that performs the method 200. The pipeline may comprise a reflection detection module 302 and a reflection removal module 304.

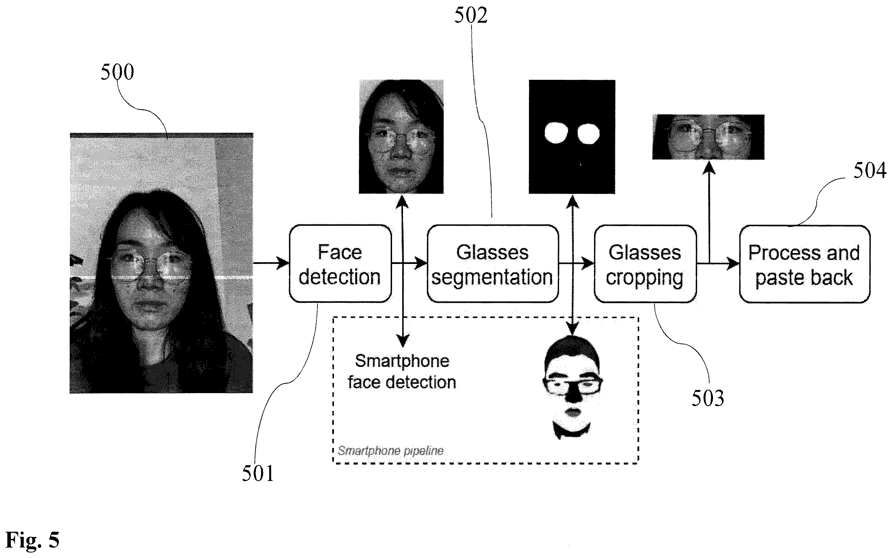

In the exemplary embodiment shown in Fig. 2, the reflection removal from an input image 500 (see also Fig. 5) may consist of the two modules 302 and 304. In the first reflection detection module 302, the areas of the input image 500 with reflections (i.e., the reflection areas) are detected. That is, the reflection detection module 302 can implement the step 201 of the method 200. Afterwards, the detected areas with reflection are extracted or cropped from the image 500 (i.e. the method step 202 is performed, e.g., also by the reflection detection module 302), and the extracted image segments or crops 303 with reflections are provided to the reflection removal module 304. That is, the method step 203 can be performed by the reflection removal module 304. The second reflection removal module 304 may comprise a CNN, which can be applied on the image segments or crops 303, in order to remove the reflections therein. The results, i.e. the reflection areas with reflections removed, are then pasted back into the original image 500, in order to obtain a processed image 500' with removed reflections.

In an embodiment, a first trained model is used to detect 201 the one or more reflection areas, i.e., it is used in the reflection detection module 302. Further, a second trained model is used to remove 202 the reflections from each of the extracted reflection areas, i.e., it is used in the reflection removal module 304. The first trained model can comprise a first CNN. As described above, also the second trained module may comprise a (second) CNN. Moreover, the first CNN can comprise a semantic segmentation CNN, which is configured to perform a semantic segmentation of the image 500.

In particular, the detection step 201 can be performed by a semantic segmentation CNN, which detects the reflection areas. For example, a semantic mask may be used to find connected components (identified as reflections). Then, their minimum circumscribing rectangle can be determined to determine the reflection areas. Multiple such rectangles may define multiple reflection areas. The reflection areas may further be used to crop (as example) the image 500 as described above. Afterwards, the reflection removal step 202 is applied to each crop (i.e., to each reflection area), and the result (i.e., the reflection area with reflections removed) is pasted back to the image 500 as described above.

The embodiments of this disclosure provide several advantages: Firstly, an improvement of the execution time for the reflection removal from the image 500 is achieved, due to the fact that the reflection removal is applied only to reflection areas. Secondly, the removal of undesirable artefacts by processing only crops or extractions (reflection areas) in the reflection removal step (e.g., implemented by a CNN), prevents areas without reflections from being changed. Thirdly, a de-reflection quality may be improved by performing the reflection removal only in the reflection areas, and not requiring the reflection removal step 202 to detect reflections in the entire image 500.

Moreover, in order to train the first and/or second trainable (or trained) model (e.g., CNN or GAN), the method 200 can further take an initial image without a reflection from a pool of images without reflections, and can generate a synthetic reflection on the initial image with a reflection generator to obtain a training image. Then, the method 200 may process the training image with a generator of the first and/or second trainable model to obtain a synthetic image. Finally, the method 200 may calculate a loss function of the first and/or second trainable model on the basis of the initial image and the synthetic image.

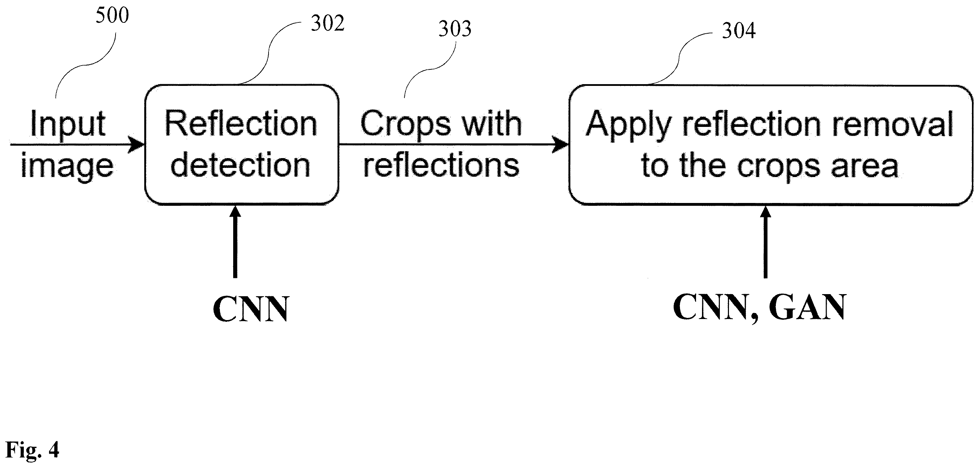

Fig. 4 shows schematic representation of a pipeline for reflection removal from an image 500 that may be used for performing the method 200 according to an embodiment. The pipeline builds on the pipeline shown in Fig. 3. The pipeline of Fig. 4 may again be part of a device 600 that performs the method 200. The pipeline of Fig. 4 may again comprise the reflection detection module 302 and the reflection removal module 304.

In the embodiment of Fig. 4, analogously to the embodiment of Fig. 3, an input image 500 comprising reflections is given as input to module 302. The module 302 is configured to detect 201 the areas comprising reflection. In this embodiment, the reflection detection 201 is performed by means of a CNN. Moreover, the output of the module 302 comprises crops with reflections (extracted reflection areas), which are given as input to the module 304. The module 304 is configured to perform a reflection removal 202 from the extracted reflection areas. This can be done either by means of a CNN or by means of a GAN. In an embodiment, the GAN can be a conditional GAN.

FIG. 5 shows a schematic representation of another pipeline for removing reflections from an image 500 that may be used to perform the method 200 according to an embodiment. The pipeline may be part of a device that performs the method 200.

For the pipeline shown in Fig. 5, the image 500 is exemplarily a photograph of a person wearing eyeglasses. The pipeline includes a first stage 501 for detecting a face of the person in the image 500. Further, the pipeline may include a second stage 502 for detecting the eyeglasses in the image 500 based on the detected face. For instance, the eyeglasses can be detected in the image 500 using a segmentation CNN. A third stage 503 of the pipeline may then detect the one or more reflection areas located within the eyeglasses detected in the image 500.

Furthermore, the pipeline of Fig. 5 can perform the following steps. The second stage 502 may further segment the eyeglasses detected in the image 500, for instance, by using the segmentation CNN. The third stage 503 may further extract or crop the obtained eyeglass segments from the image 500, and may detect 201 the one or more reflection areas located within the eyeglasses by removing eyeglasses segments without reflection from the extracted eyeglasses segments. Further, a fourth stage 504 may remove the reflection from each of the extracted eyeglasses segments with reflection and may paste back 504 the areas with removed reflections to obtain the processed image 500'.

Accordingly, in this embodiment, the reflections are removed only from eye-glasses area, not from any other part of image 500. That is, the first stage 501 may detect the eyeglasses, for example, using face detection and face parsing tool. Then, a CNN can be applied to the eyeglasses crops in the fourth stage 504 and the result can be pasted back.

Fig. 6 shows a device 600 according to an embodiment. The device 600 may be configured to perform the method 200, including the steps 201, 202 and 203, in order to remove reflections from an image 500. The output may be the processed image 500' with less reflections or no reflections. The device 600 may comprise a camera to obtain the image 500.

Further, the device 600 may comprise a processor or processing circuitry (not shown) configured to perform, conduct or initiate the various steps of the method 200 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors.

The device 600 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the method 200 to be performed.

In one embodiment, the processing circuitry comprises one or more processors and a non-transitory memory connected to the one or more processors. The non-transitory memory may carry executable program code which, when executed by the one or more processors, causes the device 600 to perform, conduct or initiate the method 200 described herein.

In particular, the processor or processing circuitry of the device 600 is configured to detect 201 one or more reflection areas in the image 500, wherein each reflection area includes a reflection. Further, it is configured to extract 202 the one or more reflection areas from the image 500, and to remove 203 the reflection from each of the extracted reflection areas.

In summary, contrary to a conventional one-stage approach (see, e.g., Fig. 1), embodiments of the present disclosure perform a two-stage reflection removal procedure (see Figs. 3-6). First, the areas with the reflections are detected 201, and, second, the reflection removal 202 is applied only to found reflection areas that have been extracted 203 from the image 500.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method (200) for removing reflections from an image (500), the method (200) comprising:
- detecting (201) one or more reflection areas in the image (500) and extracting (202) the one or more reflection areas from the image (500) by using a first trained model in a reflection detection module (302), wherein
the image (500) is given as input to the reflection detection module (302), and the output of the reflection detection module (302) extracting the one or more reflection areas from the image (500) comprises crops from the image (500) of only the one or more reflection areas, wherein each reflection area includes a reflection,
- removing (203) the reflection from each of the extracted reflection areas by using a second trained model in a reflection removal module (304),
- wherein the method is **characterized by** further comprising:
only the extracted reflection areas are given as input to the reflection removal module (304), and the output of the reflection removal module (304) is the extracted reflection areas without the reflection, and
- reinserting the extracted reflection areas without the reflection into the image (500) to replace, respectively, the detected reflection areas with the reflection.

2. The method (200) of claim 1, wherein:
the first and/or second trained model are/is trained by taking an initial image without a reflection from a pool of images without reflections, and generating a synthetic reflection on the initial image with a reflection generator to obtain a training image, and processing the training image with a generator of the first and/or second trained model on the basis of the initial image and the synthetic image, and finally calculating a loss function of the first and/or second trained model on the basis of the initial image and the synthetic image.

3. The method (200) of claim 2, wherein the first trained model comprises a first convolutional neural network, CNN.

4. The method (200) of claim 3, wherein the first CNN comprises a semantic segmentation CNN configured to perform a semantic segmentation of the image to detect the one or more reflection areas using a semantic mask, wherein
the semantic mask is used to find connected components identified as reflections, and to further find a minimum circumscribing rectangle of the reflections to determine the reflection areas.

5. The method (200) of any one of the claims 2 to 4, wherein the second trained model comprises a generative adversarial network, GAN.

6. The method (200) of claim 5, wherein the GAN comprises a conditional GAN.

7. The method (200) of any one of the claims 2 to 4, wherein the second trained model comprises a second CNN.

8. The method (200) of claim 4, wherein the image (500) is a photograph of a person wearing eyeglasses, and wherein the step of detecting (201) the one or more reflection areas comprises:
- detecting (501) a face of the person in the image (500),
- detecting the eyeglasses in the image (500) by using the segmentation CNN to segment the eyeglasses based on the detected face and face parsing tool, and
- detecting (201) the one or more reflection areas located within the eyeglasses detected in the image (500).

9. The method (200) of claim 8, further comprising:
- segmenting (502) the eyeglasses detected in the image by the segmentation CNN,
- extracting (503) the obtained eyeglass segments from the image (500),
- detecting (201, 504) the one or more reflection areas located within the eyeglasses detected in the image (500), and
- removing (203, 504) the reflection from each of the extracted eyeglasses segments with reflection.

10. A device (600) for removing reflections from an image (500), the device (600) comprising means being configured to perform the method (200) according to any one of the claims 1 to 9.

11. A computer program comprising instructions which, when the program is executed by a computer, cause the computer to carry out the method (200) according to any one of the claims 1 to 9.

## Patentansprüche

1. Verfahren (200) zur Beseitigung von Reflexionen aus einem Bild (500), wobei das Verfahren (200) Folgendes umfasst:
- Erkennen (201) eines oder mehrerer Reflexionsbereiche in dem Bild (500) und Extrahieren (202) des einen oder der mehreren Reflexionsbereiche aus dem Bild (500) durch Verwenden eines ersten trainierten Modells in einem Reflexionserkennungsmodul (302), wobei
das Bild (500) als Eingabe in das Reflexionserkennungsmodul (302) vorgegeben ist und die Ausgabe des Reflexionserkennungsmoduls (302), das den einen oder die mehrere Reflexionsbereiche aus dem Bild (500) extrahiert, nur Ausschnitte des einen oder der mehreren Reflexionsbereiche aus dem Bild (500) umfasst, wobei jeder Reflexionsbereich eine Reflexion enthält,
- Beseitigen (203) der Reflexion aus jedem der extrahierten Reflexionsbereiche durch Verwenden eines zweiten trainierten Modells in einem Reflexionsbeseitigungsmodul (304),
- wobei das Verfahren **dadurch gekennzeichnet ist, dass** es ferner Folgendes umfasst:
nur die extrahierten Reflexionsbereiche sind als Eingabe in das Reflexionsbeseitigungsmodul (304) gegeben und die Ausgabe des Reflexionsbeseitigungsmoduls (304) sind die extrahierten Reflexionsbereiche ohne die Reflexion, und
- Wiedereinfügen der extrahierten Reflexionsbereiche ohne die Reflexion in das Bild (500), um jeweils die erkannten Reflexionsbereiche mit der Reflexion zu ersetzen.

2. Verfahren (200) nach Anspruch 1, wobei:
das erste und/oder das zweite trainierte Modell durch Entnehmen eines anfänglichen Bildes ohne Reflexion aus einem Pool von Bildern ohne Reflexionen und Generieren einer synthetischen Reflexion auf dem anfänglichen Bild mit einem Reflexionsgenerator trainiert wird/werden, um ein Trainingsbild zu erhalten, und Verarbeiten des Trainingsbildes mit einem Generator des ersten und/oder des zweiten trainierten Modells auf der Basis des anfänglichen Bildes und des synthetischen Bildes und schließlich Berechnen einer Verlustfunktion des ersten und/oder des zweiten Modells auf der Basis des anfänglichen Bildes und des synthetischen Bildes.

3. Verfahren (200) nach Anspruch 2, wobei das erste trainierte Modell ein erstes neuronales Faltungsnetzwerk, CNN, umfasst.

4. Verfahren (200) nach Anspruch 3, wobei das erste CNN ein CNN für semantische Segmentierung umfasst, das dazu konfiguriert ist, eine semantische Segmentierung des Bildes zum Erkennen des einen oder der mehreren Reflexionsbereiche unter Verwendung einer semantischen Maske durchzuführen, wobei
die semantische Maske verwendet wird, um verbundene Komponenten zu finden, die als Reflexionen identifiziert werden, und ferner ein minimales umschreibendes Rechteck der Reflexionen zu finden, um die Reflexionsbereiche zu bestimmen.

5. Verfahren (200) nach einem der Ansprüche 2 bis 4, wobei das zweite trainierte Modell ein generatives kontradiktorisches Netzwerk, GAN, umfasst.

6. Verfahren (200) nach Anspruch 5, wobei das GAN ein bedingtes GAN umfasst.

7. Verfahren (200) nach einem der Ansprüche 2 bis 4, wobei das zweite trainierte Modell ein zweites CNN umfasst.

8. Verfahren (200) nach Anspruch 4, wobei das Bild (500) eine Fotografie einer Person ist, die eine Brille trägt, und wobei der Schritt des Erkennens (201) des einen oder der mehreren Reflexionsbereiche Folgendes umfasst:
- Erkennen (501) eines Gesichts der Person in dem Bild (500),
- Erkennen der Brille in dem Bild (500) durch Verwenden des Segmentierungs-CNN, um die Brille basierend auf dem erkannten Gesicht und einem Gesichtsanalysetool zu segmentieren, und
- Erkennen (201) des einen oder der mehreren Reflexionsbereiche, die sich innerhalb der in dem Bild (500) erkannten Brille befinden.

9. Verfahren (200) nach Anspruch 8, ferner umfassend:
- Segmentieren (502) der in dem Bild erkannten Brille durch das Segmentierungs-CNN,
- Extrahieren (503) der erhaltenen Brillensegmente aus dem Bild (500),
- Erkennen (201, 504) des einen oder der mehreren Reflexionsbereiche, die sich innerhalb der in dem Bild (500) erkannten Brille befinden, und
- Beseitigen (203, 504) der Reflexion aus jedem der extrahierten Brillensegmente mit Reflexion.

10. Vorrichtung (600) zum Beseitigen von Reflexionen aus einem Bild (500), wobei die Vorrichtung (600) Mittel umfasst, die zum Durchführen des Verfahrens (200) nach einem der Ansprüche 1 bis 9 konfiguriert sind.

11. Computerprogramm, umfassend Anweisungen, die bei Ausführung des Programms durch einen Computer den Computer zum Durchführen des Verfahrens (200) nach einem der Ansprüche 1 bis 9 veranlassen.

## Revendications

1. Procédé (200) d'élimination de reflets d'une image (500), le procédé (200) comportant :
- la détection (201) d'une ou de plusieurs zones de reflet dans l'image (500) et l'extraction (202) de la ou des zones de reflet de l'image (500) en utilisant un premier modèle entraîné dans un module (302) de détection de reflets,
l'image (500) étant donnée comme entrée au module (302) de détection de reflets, et la sortie de l'extraction, par le module (302) de détection de reflets, de la ou des zones de reflet de l'image (500) comportant des découpes issues de l'image (500) de la ou des zones de reflet uniquement, chaque zone de reflet comprenant un reflet,
- l'élimination (203) du reflet de chacune des zones de reflet extraites en utilisant un second modèle entraîné dans un module (304) d'élimination de reflets,
- le procédé étant **caractérisé en ce qu'**il comporte en outre :
le fait de ne donner que les zones de reflet extraites comme entrée au module (304) d'élimination de reflets, la sortie du module (304) d'élimination de reflets étant les zones de reflet extraites sans le reflet, et
- la réinsertion des zones de reflet extraites sans le reflet dans l'image (500) pour remplacer respectivement les zones de reflet détectées comportant le reflet.

2. Procédé (200) selon la revendication 1, dans lequel :
le premier et/ou le second modèle entraîné sont entraînés en prenant une image initiale sans reflet à partir d'une réserve d'images sans reflets, et en générant un reflet synthétique sur l'image initiale à l'aide d'un générateur de reflets pour obtenir une image d'apprentissage, et en traitant l'image d'apprentissage à l'aide d'un générateur du premier et/ou du second modèle entraîné sur la base de l'image initiale et de l'image synthétique, et enfin en calculant une fonction de perte du premier et/ou du second modèle entraîné sur la base de l'image initiale et de l'image synthétique.

3. Procédé (200) selon la revendication 2, dans lequel le premier modèle entraîné comporte un premier réseau neuronal convolutif, CNN.

4. Procédé (200) selon la revendication 3, dans lequel le premier CNN comporte un CNN de segmentation sémantique configuré pour effectuer une segmentation sémantique de l'image pour détecter la ou les zones de reflet à l'aide d'un masque sémantique, le masque sémantique étant utilisé pour trouver des composants liés identifiés en tant que reflets, et pour trouver en outre un rectangle circonscrit minimum des reflets pour déterminer les zones de reflet.

5. Procédé (200) selon l'une quelconque des revendications 2 à 4, dans lequel le second modèle entraîné comporte un réseau antagoniste génératif, GAN.

6. Procédé (200) selon la revendication 5, dans lequel le GAN comporte un GAN conditionnel.

7. Procédé (200) selon l'une quelconque des revendications 2 à 4, dans lequel le second modèle entraîné comporte un second CNN.

8. Procédé (200) selon la revendication 4, dans lequel l'image (500) est une photographie d'une personne portant des lunettes, et dans lequel l'étape de détection (201) de la ou des zones de reflet comporte :
- la détection (501) d'un visage de la personne dans l'image (500),
- la détection des lunettes dans l'image (500) en utilisant le CNN de segmentation pour segmenter les lunettes d'après le visage détecté et un outil d'analyse de visage, et
- la détection (201) de la ou des zones de reflet situées à l'intérieur des lunettes détectées dans l'image (500).

9. Procédé (200) selon la revendication 8, comportant en outre :
- la segmentation (502) des lunettes détectées dans l'image par le CNN de segmentation,
- l'extraction (503) des segments de lunettes obtenus à partir de l'image (500),
- la détection (201, 504) de la ou des zones de reflet situées à l'intérieur des lunettes détectées dans l'image (500), et
- l'élimination (203, 504) du reflet de chacun des segments de lunettes extraits avec reflet.

10. Dispositif (600) d'élimination de reflets d'une image (500), le dispositif (600) comportant des moyens qui sont configurés pour réaliser le procédé (200) selon l'une quelconque des revendications 1 à 9.

11. Programme informatique comportant des instructions qui, lorsque le programme est exécuté par un ordinateur, amènent l'ordinateur à réaliser le procédé (200) selon l'une quelconque des revendications 1 à 9.
